(19) Europäisches Patentamt
European Patent Office
Office européen des brevets

(11) **EP 4 700 836 A1**

(12) **EUROPEAN PATENT APPLICATION**
published in accordance with Art. 153(4) EPC

(43) Date of publication:
**25.02.2026 Bulletin 2026/09**

(21) Application number: **24908128.2**

(22) Date of filing: **19.12.2024**

(51) International Patent Classification (IPC):
*H01M 4/04* (2006.01)      *H01M 4/1395* (2010.01)
*H01M 4/134* (2010.01)      *H01M 4/38* (2006.01)
*H01M 4/48* (2010.01)      *H01M 10/0566* (2010.01)
*H01M 10/052* (2010.01)      *H01M 10/44* (2006.01)
*H01M 4/02* (2006.01)

(52) Cooperative Patent Classification (CPC):
H01M 4/02; H01M 4/04; H01M 4/134;
H01M 4/1395; H01M 4/38; H01M 4/48;
H01M 10/052; H01M 10/0566; H01M 10/44;
Y02E 60/10

(86) International application number:
**PCT/KR2024/020747**

(87) International publication number:
**WO 2025/135846 (26.06.2025 Gazette 2025/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  22.12.2023  KR 20230189412
18.12.2024  KR 20240189739

(71) Applicants:
• **LG Energy Solution, Ltd.**
**Seoul 07335 (KR)**
• **Seoul National University R&DB Foundation
Gwanak-gu
Seoul 08826 (KR)**

(72) Inventors:
• **CHAE, Jonghyun
Daejeon 34122 (KR)**

• **KWON, Yohan
Daejeon 34122 (KR)**
• **JOO, Mun Kyu
Daejeon 34122 (KR)**
• **KIM, Jinyoung
Seoul 08744 (KR)**
• **PARK, Eunseok
Yongin-si Gyeonggi-do 16925 (KR)**
• **LEE, Taeyong
Changwon-si Gyeongsangnam-do 51643 (KR)**
• **CHOI, Jang Wook
Seoul 06737 (KR)**
• **CHOI, Taehoon
Seoul 08293 (KR)**

(74) Representative: **Hoffmann Eitle
Patent- und Rechtsanwälte PartmbB
Arabellastraße 30
81925 München (DE)**

(54) **METHOD FOR MANUFACTURING PRE-LITHIATED NEGATIVE ELECTRODE, NEGATIVE ELECTRODE MANUFACTURED THEREBY, AND LITHIUM SECONDARY BATTERY COMPRISING NEGATIVE ELECTRODE**

(57)  The present invention relates to a method for manufacturing a pre-lithiated negative electrode, the method including: wetting a negative electrode active material layer including a silicon-based negative electrode active material with an electrolyte solution for pre-lithiation; and bringing a lithium metal layer into contact with at least one surface of the negative electrode active material layer wetted with the electrolyte solution for pre-lithiation, in which the electrolyte solution for pre-lithiation includes a lithium salt at a concentration of more than 3 M and a non-aqueous solvent, a negative electrode with improved air stability manufactured therefrom, and a lithium secondary battery including the negative electrode.

EP 4 700 836 A1

[Figure 1]

## Description

[Technical Field]

The present invention claims priority to and the benefit of Korean Patent Application Nos. 10-2023-0189412 and 10-2024-0189739 filed in the Korean Intellectual Property Office on December 22, 2023 and December 18, 2024, respectively, the entire contents of which are incorporated herein by reference.

[Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more.

As technology development of and demand for mobile devices have increased, demands for secondary batteries as an energy source have been rapidly increased. Among such secondary batteries, lithium secondary batteries having high energy density and voltage, long cycle life, and low self-discharge rate have been commercialized and widely used. Further, as an electrode for such a high capacity lithium secondary battery, studies have been actively conducted on a method for preparing a high-density electrode having a higher energy density per unit volume.

In general, a secondary battery is composed of a positive electrode, a negative electrode, an electrolyte solution, and a separator. The negative electrode includes a negative electrode active material for intercalating and de-intercalating lithium ions from the positive electrode, and as the negative electrode active material, a silicon-based particle having high discharge capacity may be used.

Meanwhile, lithium secondary batteries begin to lose lithium from the first charge after the battery is manufactured. During subsequent charge-discharge cycles and high-temperature storage periods, a small but continuous loss of lithium occurs, causing the battery to degrade. In order to compensate for this lithium loss, the additional introduction of lithium to the battery before it is operated is called pre-lithiation. An expected effect through pre-lithiation is an increase in the capacity (energy density) of a battery or an improvement in the cycle service life of the battery.

Among pre-lithiation methods, there is a method for injecting a compound containing an excess amount of lithium as an additive during battery manufacturing, and lithium is usually injected in the form of a positive electrode or negative electrode additive. Lithium alloy compounds exhibit low redox potential and high capacity characteristics, and thus may be used as negative electrode pre-lithiation additives. However, since the lithium alloy compounds are usually highly reactive and unstable in air, there is a problem in that it is difficult to apply the lithium alloy compounds to battery manufacturing processes.

As the pre-lithiation method, there is also a method for directly injecting lithium into an electrode, in addition to the above-described method for adding a high-capacity lithium compound to the electrode. Representative methods for injecting lithium into an electrode include an electrochemical pre-lithiation method, a direct lithium contact method, and the like. As the lithium direct contact pre-lithiation method, there are dry pre-lithiation methods, in which an electrolyte solution is not used, and wet pre-lithiation methods, in which an electrolyte solution is used.

Meanwhile, although silicon-based negative electrode active materials have a high capacity of 3579 mAh/g, their service life is poor due to a large volume change of up to 300% during charging and discharging, so that it has been difficult to commercialize the silicon-based negative electrode active material. In order to overcome these problems, research has been actively conducted into the pre-lithiation of silicon-based negative electrodes. When a silicon-based negative electrode is pre-lithiated, a Li-Si alloy is formed, but just like the pre-lithiated additives described above, it is most important to secure the air stability of the Li-Si alloy.

[Related Art Document]

[Patent Document]

Korean Patent Application Laid-Open No. 10-2019-0083304

[Detailed Description of the Invention]

[Technical Problem]

The present invention relates to a method for manufacturing a pre-lithiated negative electrode capable of improving air stability, a negative electrode manufactured therefrom, and a lithium secondary battery including the negative electrode.

[Technical Solution]

An exemplary embodiment of the present specification provides a method for manufacturing a pre-lithiated negative electrode, the method including: wetting a negative electrode active material layer including a silicon-based negative electrode active material with an electrolyte solution for pre-lithiation; and

bringing a lithium metal layer into contact with at least one surface of the negative electrode active material layer wetted with the electrolyte solution for pre-lithiation,
in which the electrolyte solution for pre-lithiation includes a lithium salt at a concentration of more than 3 M and a non-aqueous solvent.

An exemplary embodiment of the present specification provides a pre-lithiated negative electrode manufactured by the above-described manufacturing method.
An exemplary embodiment of the present specification provides a lithium secondary battery including: a positive electrode;

the above-described pre-lithiated negative electrode;
a separator provided between the positive electrode and the pre-lithiated negative electrode; and
an electrolyte solution.

An exemplary embodiment of the present specification provides a battery module including the above-described lithium secondary battery.
Another exemplary embodiment of the present specification provides a battery pack including the above-described battery module.
Finally, an exemplary embodiment of the present specification provides a battery pack including the above-described lithium secondary battery.

[Advantageous Effects]

The present invention can provide a method for manufacturing a pre-lithiated negative electrode, which is capable of forming a uniform artificial solid electrolyte interphase layer (SEI layer) having a high LiF content while simultaneously performing pre-lithiation on a silicon-based negative electrode by a wet pre-lithiation method using a high-concentration electrolyte solution for pre-lithiation, which can maintain high ionic conductivity of a contact ion pair (CIP) structure, thereby improving air stability, a negative electrode manufactured therefrom, and a lithium secondary battery including the negative electrode.

[Brief Description of Drawings]

FIG. 1 is a view illustrating the stacking structure of a pre-lithiated negative electrode manufactured according to an exemplary embodiment of the present invention.
FIG. 2 is a view illustrating the stacking structure of a lithium secondary battery manufactured according to an exemplary embodiment of the present invention.
FIG. 3 is a view illustrating a method for manufacturing a pre-lithiated negative electrode according to an exemplary embodiment of the present specification as a flow-chart.
FIG. 4 is a view illustrating Raman spectra obtained by measuring an electrolyte solution for pre-lithiation in the Example and Comparative Example according to Preparation Example 1 by Raman spectroscopy.
FIG. 5 is a view illustrating discharge curves in the first charge-discharge cycle for each of the coin-full cells not exposed to dry air and exposed to dry air for 7 days in each of the Examples and Comparative Examples according to Preparation Example 1.
FIG. 6 is a view illustrating discharge curves in the 50th charge-discharge cycle for each of the coin-full cells not exposed to dry air and exposed to dry air for 7 days in each of the Examples and Comparative Examples according to Preparation Example 1.
FIG. 7 is a view illustrating the ionic conductivity measured according to the lithium salt concentration of the electrolyte solutions for pre-lithiation used in each of the Examples, Reference Examples, and Comparative Examples according to Preparation Example 2.

FIG. 8 is a view illustrating the C-rate characteristics according to the lithium salt concentration of the electrolyte solution for pre-lithiation in each Comparative Example according to Preparation Example 2.

FIG. 9 is a view illustrating the C-rate characteristics according to the lithium salt concentration of the electrolyte solution for pre-lithiation in each of the Examples and Reference Examples according to Preparation Example 2.

FIG. 10 is a view illustrating a comparison of C-rate characteristics of Example 2-1 according to Preparation Example 2 and Comparative Example 2-4.

[Best Mode]

Prior to the description of the present invention, some terms will be first defined.

When one part "includes" one constituent element in the present specification, unless otherwise specifically described, this does not mean that another constituent element is excluded, but means that another constituent element may be further included.

In the present specification, 'p to q' means a range of 'p or more and q or less.'

In the present specification, "specific surface area" is measured by the BET method, and is specifically calculated from an amount of nitrogen gas adsorbed under liquid nitrogen temperature (77K) using BELSORP-mini II manufactured by BEL Japan, Inc. That is, in the present specification, the BET specific surface area may mean a specific surface area measured by the measurement method.

In the present specification, "Dn" means the particle size distribution, and means the particle diameter at the n% point of the cumulative distribution of the number of particles according to the particle diameter. That is, D50 is the particle diameter (average particle diameter) at the 50% point of the cumulative distribution of the number of particles according to the particle diameter, D90 is the particle diameter at the 90% point of the cumulative distribution of the number of particles according to the particle diameter, and D10 is the particle diameter at the 10% point of the cumulative distribution of the number of particles according to the particle diameter. Meanwhile, the average particle diameter may be measured using a laser diffraction method. Specifically, after a powder to be measured is dispersed in a dispersion medium, a particle size distribution is calculated by introducing the resulting dispersion into a commercially available laser diffraction particle size measurement device (for example, Microtrac S3500) to measure the difference in diffraction pattern according to the particle size when particles pass through the laser beam.

In an exemplary embodiment of the present specification, the particle size or particle diameter may mean the average diameter or representative diameter of each grain forming a metal powder.

In the present specification, the structure of the electrolyte solution may be observed through Raman spectroscopy. In the Raman spectroscopy, a Raman spectrometer (DXR2xi, Thermo Fisher, USA) was used, and to measure the Raman spectra of various electrolyte solutions, a 2 mL vial was filled with each electrolyte solution without air bubbles, and then Raman analysis was performed in a range of 700 cm$^{-1}$ to 760 cm$^{-1}$.

In the present specification, the ionic conductivity of the electrolyte solution for pre-lithiation was measured using a METTLER TOLEDO Seven Direct SD30 ionic conductivity measuring device.

Terms or words used in the specification should not be interpreted as being limited to typical or dictionary meaning and should be interpreted with a meaning and a concept which conform to the technical spirit of the present invention based on the principle that an inventor can appropriately define a concept of a term in order to describe his/her own invention in the best way.

Singular expressions of the terms used in the present specification include plural expressions unless they have definitely opposite meanings in the context.

Hereinafter, preferred exemplary embodiments of the present invention will be described in detail. However, the exemplary embodiments of the present invention may be modified into various other forms, and the scope of the present invention is not limited to the exemplary embodiments which will be described below.

A method for manufacturing a pre-lithiated negative electrode according to an exemplary embodiment of the present specification includes wetting a negative electrode active material layer including a silicon-based negative electrode active material with an electrolyte solution for pre-lithiation; and bringing a lithium metal layer into contact with at least one surface of the negative electrode active material layer wetted with the electrolyte solution for pre-lithiation, in which the electrolyte solution for pre-lithiation includes a lithium salt at a concentration of more than 3 M and a non-aqueous solvent.

Lithium secondary batteries begin to lose lithium from the first charge after the battery is manufactured, and during subsequent charge-discharge cycles and high-temperature storage periods, a small but continuous loss of lithium occurs, causing the battery to degrade. In order to compensate for this lithium loss, the present invention performs a pre-lithiation process in which lithium is additionally injected into a battery before the battery is operated, and among them, the present invention may increase the capacity (energy density) of a battery or improve the cycle performance of a battery by performing an ex situ wet pre-lithiation process which is economical and does not cause heat generation problems.

Meanwhile, although a silicon-based negative electrode is used to obtain a high-capacity battery in the present invention, a problem in that a volume change of up to 300% during charging and discharging causes damage to a solid electrolyte interphase (SEI) layer may occur.

In this case, the SEI layer is a thin solid film that forms on the surface of a negative electrode as a result of a chemical reaction that occurs when the substances in the electrolyte solution are electrolyzed for the first time during a process in which lithium ions in a battery move to the negative electrode during the first charging after the battery is manufactured. The SEI layer prevents further decomposition reactions of the electrolyte solution in the battery and allows only lithium ions to move through the electrolyte solution, and in particular, LiF, as the main component of such an SEI layer, is the most electrochemically stable, and thus, may more stably maintain the SEI layer.

When the SEI layer is exposed to air during storage before assembling a battery after wet pre-lithiation is performed, the SEI layer may be damaged when the oxidation durability of the SEI layer is insufficient, which may result in a problem in that lithium loss in the pre-lithiated negative electrode and rapid degradation of the battery. To solve this problem, the present invention is characterized by providing a method for manufacturing a pre-lithiated negative electrode, which is capable of forming a uniform artificial SEI layer with a high LiF content using a high-concentration lithium salt and a non-aqueous solvent, for example, an ether-based solvent, as an electrolyte solution for pre-lithiation used in wet pre-lithiation.

That is, the present invention has an object to improve the air safety of a negative electrode that has been pre-lithiated before assembly of a battery by performing an ex situ wet pre-lithiation while being capable of improving the capacity and cycle performance of a silicon-based negative electrode through pre-lithiation, and for this purpose, the present invention is characterized in that an electrolyte solution, which includes a high concentration of lithium salt in a non-aqueous solvent, for example, an ether-based solvent, is used as an electrolyte solution for pre-lithiation in order to form an artificial SEI layer including abundant and uniform LiF due to the CIP structure of the electrolyte solution.

In addition, when an electrolyte solution including a high concentration of a lithium salt is generally used, a problem in that the viscosity increases and ionic conductivity (or ionic diffusion rate) decreases may occur, but although the electrolyte solution for pre-lithiation of the present invention is highly concentrated, high ionic conductivity may be maintained using a combination of an ether-based solvent and a specific lithium salt.

The method for preparing a pre-lithiated negative electrode according to an exemplary embodiment of the present specification may include wetting a negative electrode active material layer including a silicon-based negative electrode active material with an electrolyte solution for pre-lithiation.

In an exemplary embodiment of the present specification, the wetting of the negative electrode active material layer with the electrolyte solution for pre-lithiation may be performed by dipping and wetting the negative electrode active material layer in the electrolyte solution for pre-lithiation.

The electrolyte solution for pre-lithiation according to an exemplary embodiment of the present specification serves as a path for moving lithium ions during the process of pre-lithiation of the negative electrode active material layer by subsequently bringing the lithium metal layer into contact with the negative electrode active material layer, and may include a lithium salt at a concentration of more than 3 M.

In an exemplary embodiment of the present specification, the electrolyte solution for pre-lithiation may include a lithium salt at a concentration of more than 3 M, specifically, 4 M or more.

In an exemplary embodiment of the present specification, the electrolyte solution for pre-lithiation may include a lithium salt with a concentration of more than 3 M and 10 M or less, specifically, 4 M or more and 8 M or less, and the concentration of the lithium salt is based on room temperature and normal pressure.

The solvation structure of the electrolyte solution changes depends on the interaction between the lithium salt and the solvent constituting the electrolyte solution, thereby affecting the properties of the SEI. In the case of a dilute electrolyte solution in which the concentration of the lithium salt is less than 1 M, the lithium ions and anions of the lithium salt are separated and form a solvent separated ion pair (SSIP) structure as the lithium ions are coordinated to about 3 to 4 solvent molecules. In addition, a free solvent that does not interact with lithium ions becomes abundant, and as this free solvent is mainly distributed on the surface of the electrode, an SEI layer whose solvent component is the main component is formed.

However, in an exemplary embodiment of the present specification, when the concentration of the lithium salt is high, exceeding 3 M, the solvent is so thin that the number of solvents coordinating the lithium ions is reduced to 1 to 2, and the lithium ions and anions of the lithium salt are brought into contact with each other to form a contact ion pair (CIP) or cation-anion aggregate (AGG) structure. Furthermore, since there is almost no free solvent that does not interact with lithium ions, the anions of the lithium salt are mainly distributed on the electrode surface, so that it is possible to form a thin and dense artificial SEI layer that is rich in LiF components.

That is, when an electrolyte solution for pre-lithiation in which the concentration of a lithium salt according to an exemplary embodiment of the present specification satisfies the above range is used, a thin and dense artificial SEI layer that is rich in LiF components may be formed.

Further, in an exemplary embodiment of the present specification, the lithium salt may include, as an anion, one or more selected from the group consisting of $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_3)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, and a combination thereof.

Specifically, in an exemplary embodiment of the present specification, the anion of the lithium salt may include one or more selected from the group consisting of $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$ and a combination thereof, and more specifically, the anion of the lithium salt may be $(FSO_2)_2N^-$.

In an exemplary embodiment of the present specification, when the lithium salt includes the anion, the lithium salt has a solubility suitable for use in an ether-based solvent, and in particular, a lithium salt including $(FSO_2)_2N^-$ as the anion is a hydrophilic salt that forms a white powder form expressed as lithium bis(fluoromethanesulfonyl)imide (LiFSI), and has a high decomposition temperature, and thus may affect the thermal stability of the SEI layer, and since the lithium salt is also stable in moisture, the amount of HF generated by reaction with moisture in the battery is remarkably less than that of $LiPF_6$, which is used as a lithium salt in the electrolyte solution for a general lithium secondary battery, so that there is a stable effect.

The electrolyte solution for pre-lithiation according to an exemplary embodiment of the present specification may include a non-aqueous solvent. The non-aqueous solvent serves to help lithium ions to dissolve in the salt, and allows the lithium metal layer to be brought into contact with the negative electrode active material layer, so that the lithium ions may move smoothly during pre-lithiation.

In addition, when a carbonate-based solvent is used together with a lithium salt at a high concentration, a problem in that the viscosity of the electrolyte solution increases and the ionic conductivity is decreased may occur, but a non-aqueous solvent according to an exemplary embodiment of the present specification, particularly, an ether-based solvent may be used with a specific lithium salt to reduce a decrease in ionic conductivity even at a high concentration.

The non-aqueous solvent included in the electrolyte solution for pre-lithiation according to an exemplary embodiment of the present specification may include one or more selected from the group consisting of diethyl ether, dipropyl ether, dibutyl ether, dimethoxymethane, trimethoxymethane, dimethoxyethane, diethoxyethane, dimethoxypropane, dioxolane, methyldioxolane, oxane, dioxane, trioxane, tetrahydrofuran, dihydropyran, tetrahydropyran, methyltetrahydrofuran, furan, methylfuran, diethylene glycol dimethyl ether, triethylene glycol dimethyl ether, tetraethylene glycol dimethyl ether, ethylene glycol divinyl ether, diethylene glycol divinyl ether, triethylene glycol divinyl ether, dipropylene glycol dimethylene ether, butylene glycol ether, and a combination thereof.

The non-aqueous solvent included in the electrolyte solution for pre-lithiation according to an exemplary embodiment of the present specification may include one or more selected from the group consisting of diethyl ether, dipropyl ether, dibutyl ether, dimethoxymethane, trimethoxymethane, dimethoxyethane, diethoxyethane, dimethoxypropane, dioxolane, methyldioxolane, oxane, dioxane, trioxane, tetrahydrofuran, dihydropyran, tetrahydropyran, methyltetrahydrofuran, furan, methylfuran, and a combination thereof.

The non-aqueous solvent included in the electrolyte solution for pre-lithiation according to an exemplary embodiment of the present specification may include one or more selected from the group consisting of diethyl ether, dipropyl ether, dibutyl ether, dimethoxymethane, trimethoxymethane, dimethoxyethane, diethoxyethane, dimethoxypropane, tetrahydrofuran, dihydropyran, tetrahydropyran, methyltetrahydrofuran, furan, methylfuran, and a combination thereof.

The non-aqueous solvent included in the electrolyte solution for pre-lithiation according to an exemplary embodiment of the present specification may include one or more selected from the group consisting of diethyl ether, dipropyl ether, dibutyl ether, dimethoxymethane, trimethoxymethane, dimethoxyethane, diethoxyethane, dimethoxypropane, and a combination thereof.

As the non-aqueous solvent included in the electrolyte solution for pre-lithiation according to an exemplary embodiment of the present specification, dimethoxyethane (DME) may be used.

The electrolyte solution for pre-lithiation according to an exemplary embodiment of the present specification has a different purpose from the electrolyte solution used during the assembly of a secondary battery to be described below, and the electrolyte solution for pre-lithiation is used to improve capacity and cycle performance by pre-lithiation of a silicon-based negative electrode, but the electrolyte solution used during the assembly of a secondary battery to be described below is used to allow lithium ions to move between the positive electrode and the negative electrode during charging and discharging of the battery.

The solvation structure of the electrolyte solution is affected by the solvation ability of the solvent as well as the concentration of the lithium salt, and the electrolyte solution for pre-lithiation according to an exemplary embodiment of the present specification has a lower solvation ability than carbonate-based solvents that are used as solvents for an electrolyte solution for a general lithium secondary battery by using the non-aqueous solvent, particularly, an ether-based solvent, thereby allowing the lithium salt to form a CIP structure. In addition, there is an advantage in that the chemical stability against the high concentration lithium salt is high, and in particular, dimethoxyethane has a small molecular weight, and thus may satisfy a suitable viscosity for use as an electrolyte solution when used in a high concentration electrolyte solution.

In an exemplary embodiment of the present specification, the wetting of the negative electrode active material layer with the electrolyte solution for pre-lithiation may wet the negative electrode active material layer for 11 hours or more, and more specifically, may wet the negative electrode active material layer for 12 hours or more.

The wetting step according to an exemplary embodiment of the present specification has an effect of enabling more uniform pre-lithiation in the thickness direction of the electrode during pre-lithiation by wetting the negative electrode active material layer with the electrolyte solution for pre-lithiation for the above range of time.

In an exemplary embodiment of the present specification, the wetting of the negative electrode active material layer with the electrolyte solution for pre-lithiation may be performed under a temperature condition of 0°C or more and 100°C or less, specifically, under a temperature condition of 10°C or more and 80°C or less, and more specifically, at room temperature, but there is no limitation thereon.

A method for manufacturing a pre-lithiated negative electrode according to an exemplary embodiment of the present specification may include bringing a lithium metal layer into contact with at least one surface of a negative electrode active material layer wetted with the electrolyte solution for pre-lithiation, which is a step for performing wet pre-lithiation by directly bringing lithium into contact with the negative electrode active material layer of the present invention.

The method for manufacturing a pre-lithiated negative electrode according to the present specification is characterized by performing wet pre-lithiation, which has an advantage in that heat generation problems do not occur as seriously as dry pre-lithiation, and the pre-lithiation process is simpler than when pre-lithiation is performed by an electrochemical method using the same electrolyte solution as the electrolyte solution for pre-lithiation according to an exemplary embodiment of the present specification.

Specifically, pre-lithiation by electrochemical methods involves constructing a battery using lithium metal as a negative electrode, and then electrochemically discharging the battery to perform the pre-lithiation of the negative electrode. Compared to the method of manufacturing a pre-lithiated negative electrode according to an exemplary embodiment of the present specification, in which pre-lithiation is performed by simply bringing lithium metal into contact with an electrode, the electrochemical method has the complication of requiring the additional construction of a separate battery for pre-lithiation.

In an exemplary embodiment of the present specification, it is possible to further include: preparing a stack for pre-lithiation, including a lithium metal layer and a substrate layer prior to the bringing of the lithium metal layer with at least one surface of the negative electrode active material layer wetted with the electrolyte solution for pre-lithiation; and positioning the stack for pre-lithiation, such that the lithium metal layer faces at least one surface of the negative electrode active material layer.

A method for manufacturing a pre-lithiated negative electrode according to an exemplary embodiment of the present specification may include preparing a stack for pre-lithiation, including a lithium metal layer and a substrate layer. That is, the stack for pre-lithiation for pre-lithiation of the negative electrode active material layer may include a lithium metal layer and a substrate layer.

In an exemplary embodiment of the present specification, the stack for pre-lithiation includes a lithium metal layer, and in this case, the lithium metal layer is a layer including lithium metal for pre-lithiation of at least one surface of the negative electrode active material layer, and a commonly used Li metal foil may be used, but the lithium metal layer is not limited thereto.

In an exemplary embodiment of the present specification, the lithium metal layer may have a thickness of 0.5 $\mu$m, specifically 1 $\mu$m or more, and more specifically 2 $\mu$m or more.

In an exemplary embodiment of the present specification, the lithium metal layer may have a thickness of 15 $\mu$m or less, specifically 10 $\mu$m or less, and more specifically 7 $\mu$m or less.

In an exemplary embodiment of the present specification, the lithium metal layer may have a thickness of 0.5 $\mu$m or more and 15 $\mu$m or less, specifically 1 $\mu$m or more and 10 $\mu$m or less, and more specifically 2 $\mu$m or more and 7 $\mu$m or less.

In an exemplary embodiment of the present specification, when the thickness of the lithium metal layer satisfies the above range, pre-lithiation may be achieved to such an extent that the irreversible capacity can be sufficiently compensated for, thereby having an effect of improving the energy density of the battery.

In an exemplary embodiment of the present specification, the stack for pre-lithiation may include a substrate layer, and the substrate layer may be used without limitation as long as the substrate layer has characteristics capable of withstanding process conditions such as high temperature in the depositing of the lithium metal layer and capable of preventing a problem in that the lithium metal layer is reversely peeled off onto the substrate layer in the process of pre-lithiation of the deposited lithium metal layer.

Specifically, in an exemplary embodiment of the present specification, the substrate layer may one or more selected from the group consisting of polyethylene terephthalate (PET), polyimide (PI), poly (methylmethacrylate) (PMMA), polypropylene, polyethylene, and polycarbonate, and may be preferably polyethylene terephthalate (PET).

**EP 4 700 836 A1**

In an exemplary embodiment of the present specification, the substrate layer may have a thickness of 1 $\mu$m or more.

In an exemplary embodiment of the present specification, the substrate layer may have a thickness of 300 $\mu$m or less, specifically 100 $\mu$m or less, and more specifically 50 $\mu$m or less.

In an exemplary embodiment of the present specification, the thickness of the substrate layer may be 1 $\mu$m or more and 300 $\mu$m or less, and may satisfy a range of specifically 1 $\mu$m or more and 100 $\mu$m or less, and more specifically 1 $\mu$m or more and 50 $\mu$m or less.

As the thickness of the substrate layer satisfies the above range, the method has a feature capable of allowing the lithium metal to be efficiently transferred to the electrode active material layer side, and capable of preventing the reverse transfer.

In an exemplary embodiment of the present specification, a deposition method for depositing the lithium metal layer on the substrate layer may be selected among an evaporation deposition method, chemical vapor deposition method, and a physical vapor deposition method, but the method is not limited thereto, and various deposition methods used in the art may be used.

In an exemplary embodiment of the present specification, the lithium metal layer may be deposited on the substrate layer by a vacuum evaporation deposition method, specifically, by a vacuum thermal evaporation deposition method.

In an exemplary embodiment of the present specification, the stack for pre-lithiation may further include a release layer between the substrate layer and the lithium metal layer.

In an exemplary embodiment of the present specification, the release layer may be one or more selected from the group consisting of polycarbonate (PC), polydimethylsiloxane (PDMS), polymethylhydrosiloxane (PMHS), polyimide (PI) and polymethylmethacrylate (PMMA), and may preferably be polymethylmethacrylate (PMMA).

In an exemplary embodiment of the present specification, the release layer may have a thickness of 0.2 $\mu$m or more, specifically 0.5 $\mu$m or more.

In an exemplary embodiment of the present specification, the release layer may have a thickness of 3 $\mu$m or less, specifically 1 $\mu$m or less.

In an exemplary embodiment of the present specification, the release layer may have a thickness of 0.2 $\mu$m or more and 3 $\mu$m or less, specifically 0.5 $\mu$m or more and 1 $\mu$m or less.

In an exemplary embodiment of the present specification, when the thickness of the release layer satisfies the above range, sufficient release force of the lithium metal layer may be secured, and after the pre-lithiation, the release layer located on the surface does not play a role in preventing heat from being released, and thus may not accelerate the formation of by-products.

In an exemplary embodiment of the present specification, the release layer may be formed by a coating method, and for example, the coating method may be a method selected from the group consisting of dip coating, spray coating, spin coating, die coating, gravure coating, micro-gravure coating, comma coating, and roll coating, but is not limited thereto, and various coating methods that can be used to form the coating layer in the art may be used.

In an exemplary embodiment of the present specification, the positioning of the stack for pre-lithiation, such that the lithium metal layer faces at least one surface of the negative electrode active material layer, is a step for pre-lithiation of the negative electrode active material layer with lithium metal.

In an exemplary embodiment of the present specification, after the bringing of the negative electrode active material layer into contact with the lithium metal layer, the method may further include performing pre-lithiation by pressurizing the negative electrode active material layer brought into contact with the lithium metal layer.

In the pressurizing step according to an exemplary embodiment of the present specification, the pressurizing condition may be 5 MPa or more and 50 MPa or less, specifically, 10 MPa or more and 40 MPa or less.

In an exemplary embodiment of the present specification, the pressurizing step may allow pre-lithiation to be more actively conducted on at least one surface of the negative electrode active material layer, and has an effect of allowing the thickness of the negative electrode to be thin even though the energy density is high.

Specifically, after the stack for pre-lithiation is positioned such that the lithium metal layer faces one or both surfaces of the negative electrode active material layer, a pressure of 5 MPa to 50 MPa may be applied to perform a wet pre-lithiation process by a lithium direct contact method.

In the pressurizing step, the higher the pressure condition, the faster the pre-lithiation reaction may be performed, and in particular, when the above range is satisfied, there is an effect of stably maintaining the conductive structure of the electrode by suppressing the volume expansion of the active material during pre-lithiation.

The manufacturing method according to an exemplary embodiment of the present specification may include removing the substrate layer or the release layer and the substrate layer.

In an exemplary embodiment of the present specification, the removing of the substrate layer or the release layer and the substrate layer may be performed after bringing the lithium metal layer into contact with the negative electrode active material layer and applying pressure to subject the negative electrode active material layer to pre-lithiation.

9

In the method for manufacturing a pre-lithiated negative electrode according to an exemplary embodiment of the present specification, pre-lithiation may occur from the point in time when the lithium metal layer is brought into contact with at least one surface of the negative electrode active material layer, and pre-lithiation may occur by applying pressure to the negative electrode active material layer brought into contact with the lithium metal layer.

In the method for manufacturing a pre-lithiated negative electrode according to an exemplary embodiment of the present specification, the negative electrode active material layer includes a silicon-based negative electrode active material, and the silicon-based negative electrode active material may include one or more selected from the group consisting of Si, silicon oxide, Si/C, and a Si alloy.

In an exemplary embodiment of the present specification, the silicon-based negative electrode active material may include one or more selected from the group consisting of Si and silicon oxide.

In an exemplary embodiment of the present specification, the silicon-based negative electrode active material includes Si, and the Si may be included in an amount of 60 parts by weight or more based on 100 parts by weight of the silicon-based negative electrode active material.

In an exemplary embodiment of the present specification, in the negative electrode active material layer, pure silicon (Si) may be used as a negative electrode active material. The use of pure silicon (Si) as a negative electrode active material may mean that, based on total 100 parts by weight of the negative electrode active material as described above, pure Si particles not bonded to other particles or elements may be included in a range of 60 parts by weight or more, preferably 65 parts by weight or more, and more preferably 70 parts by weight or more, and may be included in a range of 95 parts by weight or less, preferably 90 parts by weight or less, and more preferably 85 parts by weight or less, based on 100 parts by weight of the negative electrode active material layer.

Specifically, in an exemplary embodiment of the present specification, the silicon-based negative electrode active material may include the Si in an amount of 60 parts by weight or more and 95 parts by weight or less, specifically 65 parts by weight or more and 90 parts by weight or less, and more specifically 70 parts by weight or more and 85 parts by weight or less, based on 100 parts by weight of the negative electrode active material layer. When the silicon-based negative electrode active material contains Si in the above range, a high-capacity battery may be obtained.

In the manufacturing method according to an exemplary embodiment of the present specification, the silicon-based negative electrode active material may further include one or more selected from the group consisting of silicon oxide, Si/C, and a Si alloy.

In an exemplary embodiment of the present specification, the silicon-based negative electrode active material may further include silicon oxide, and the silicon oxide corresponds to an amorphous matrix in the silicon-based negative electrode active material. The silicon oxide may be in a form including some of Si and $SiO_2$, and the Si may also form a phase. That is, the x corresponds to the ratio of the number of O to Si included in the silicon oxide.

In an exemplary embodiment of the present specification, the negative electrode active material layer may include the silicon oxide in an amount of 40 parts by weight or more, preferably 50 parts by weight or more, and more preferably 60 parts by weight or more, and may include the silicon oxide in an amount of 100 parts by weight or less, preferably 90 parts by weight or less, and more preferably 80 parts by weight or less, based on 100 parts by weight of the negative electrode active material layer. When the negative electrode active material layer includes silicon oxide in the above range, the discharge capacity of the lithium secondary battery may be improved.

In an exemplary embodiment of the present specification, the silicon-based negative electrode active material may include metal impurities.

The metal impurities are impurities that may be included in silicon, and the content thereof may satisfy the range of 0.1 parts by weight or less based on 100 parts by weight of the silicon-based negative electrode active material.

Meanwhile, the silicon-based negative electrode active material of the present specification includes Si, and the average particle diameter (D50) of the Si may be 5 nm to 10 μm, specifically 5.5 nm to 8 μm, and more specifically 10 nm to 7 μm.

When the average particle diameter is included in the above range, the viscosity of a negative electrode slurry is formed in a suitable range because the specific surface area of the particle is included in a suitable range. Accordingly, the dispersion of the particles constituting the negative electrode slurry is facilitated. Furthermore, the size of a silicon-based active material has a value equal to or more than the lower limit value range, and since a composite composed of a conductive material and a binder in the negative electrode slurry makes a contact area between silicon particles and conductive materials excellent, the possibility that the conductive network lasts is increased, so that the capacity retention rate is increased. Meanwhile, when the average particle diameter satisfies the above range, excessively large silicon particles are eliminated to form a smooth surface of the negative electrode, and accordingly, it is possible to prevent the phenomenon of the non-uniform current density during charging and discharging.

In an exemplary embodiment of the present specification, the silicon-based negative electrode active material generally has a characteristic BET specific surface area. The BET specific area of the silicon-based active material is preferably 0.01 m²/g to 150.0 m²/g, more preferably 0.1 m²/g to 100.0 m²/g, particularly preferably 0.2 m²/g to 80.0 m²/g, and most preferably 0.2 m²/g to 18.0 m²/g. The BET specific surface area is measured by DIN 66131 (using nitrogen).

In an exemplary embodiment of the present specification, the silicon-based negative electrode active material may be present, for example, in a crystalline or amorphous form, and preferably is not porous. The silicon particles are preferably spherical or fragment-shaped particles. Alternatively but less preferably, the silicon particles may also have a fibrous structure or be present in the form of a film or coating including silicon.

In an exemplary embodiment of the present specification, the silicon-based negative electrode active material may be present in an amount of 40 parts by weight or more based on total 100 parts by weight of the negative electrode active material layer.

In an exemplary embodiment of the present specification, the silicon-based negative electrode active material may be present in an amount of 40 parts by weight or more and 95 parts by weight or less, specifically 50 parts by weight or more and 90 parts by weight or less, and more specifically 60 parts by weight or more and 80 parts by weight or less, based on total 100 parts by weight of the negative electrode active material layer.

In the charging/discharging reaction of a lithium secondary battery, lithium released from the positive electrode is intercalated into the negative electrode during charging, and de-intercalated from the negative electrode and returned to the positive electrode during discharging, and in the case of a silicon-based negative electrode active material, volume change and surface side reactions are severe, so that a large amount of the lithium intercalated into the negative electrode during the initial charging cannot return to the positive electrode, and accordingly, there occurs a problem in that the initial irreversible capacity becomes large. When the initial irreversible capacity increases, there occurs a problem in that the battery capacity and the cycle characteristics are rapidly reduced.

In the present invention, in order to solve the problems as described above, the negative electrode active material layer is subjected to pre-lithiation before manufacturing a lithium secondary battery, thereby solving the initial irreversible capacity problem, and specifically, the present invention relates to a pre-lithiation method capable of improving air stability, that is, oxidation durability, of the negative electrode and the battery by forming a uniform artificial SEI layer with a high LiF content while being capable of improving the capacity (energy density) or cycle performance of a battery through a wet pre-lithiation process using a direct lithium contact method.

In the manufacturing method according to an exemplary embodiment of the present specification, the negative electrode active material layer may further include a negative electrode conductive material and a negative electrode binder.

In the related art, it was common to use only a graphite-based compound as a negative electrode active material, but recently, as the demand for a high-capacity battery has increased, attempts to mix and use a silicon-based compound have been increased in order to increase the capacity. However, in the case of the silicon-based compound, there is a limitation that the volume rapidly expands in the process of charging/discharging to impair the conductive path formed in the negative electrode active material layer, consequently resulting in deterioration in the performance of the battery, so that the type of negative electrode conductive material used together with the silicon-based active material is important.

Accordingly, in an exemplary embodiment of the present specification, the negative electrode conductive material may include one or more selected from the group consisting of a planar conductive material, a linear conductive material, and a dotted conductive material, and more specifically, may include one or more selected from the group consisting of a planar conductive material and a dotted conductive material.

In an exemplary embodiment of the present specification, the negative electrode conductive material may be present in an amount of 1 part by weight or more and 40 parts by weight or less based on total 100 parts by weight of the negative electrode active material layer.

Specifically, in an exemplary embodiment, the negative electrode conductive material may be included in an amount of 1 part by weight or more and 40 parts by weight or less, specifically 5 parts by weight or more and 30 parts by weight or less, and more specifically 10 parts by weight or more and 25 parts by weight or less, based on total 100 parts by weight of the negative electrode active material layer.

When the content of the negative electrode conductive material satisfies the above range, there is an effect of stably exhibiting the charge and discharge capacity while maintaining the conductive network structure of the electrode without damaging the conductive path formed in the negative electrode active material layer.

In an exemplary embodiment of the present specification, the planar conductive material used as the above-described negative electrode conductive material has a structure and a role different from those of a carbon-based active material generally used as a negative electrode active material. Specifically, the carbon-based active material used as the negative electrode active material may be artificial graphite or natural graphite, and means a material that is processed into a spherical or dot shape and used in order to facilitate the storage and release of lithium ions.

In contrast, the planar conductive material used as the negative electrode conductive material is a material having a planar or plate-like shape, and may be expressed as plate-like graphite. That is, the planar conductive material is a material included to maintain the conductive path in the negative electrode active material layer, and means a material for securing a conductive path in a planar form in the negative electrode active material layer rather than a role of storing and releasing lithium.

That is, in an exemplary embodiment of the present specification, the fact that plate-like graphite is used as a conductive material means that the plate-like graphite is processed into a planar or plate-like shape and used as a material that secures a conductive path rather than a role of storing or releasing lithium. In this case, the negative electrode active material included together has high capacity characteristics for lithium storage and release, and plays a role capable of storing and releasing all lithium ions transmitted from the positive electrode.

In contrast, in an exemplary embodiment of the present specification, the fact that a carbon-based active material is used as an active material means that the carbon-based active material is processed into a dot or spherical shape and used as a material that serves to store or release lithium.

In an exemplary embodiment of the present specification, the negative electrode conductive material may include a planar conductive material.

In the present specification, the "planar conductive material" refers to a conductive material with a two-dimensional (2D) structure in which atoms form a crystal structure with a thickness of a single atomic layer or two or more atomic layers on a planar surface, may increase the plane contact between silicon particles in the negative electrode to improve conductivity and simultaneously suppress the disconnection of the conductive path due to volume expansion, and may be expressed as a plate-like conductive material or a bulk-type conductive material.

In an exemplary embodiment of the present specification, the planar conductive material may include at least one selected from the group consisting of plate-like graphite, graphene, graphene oxide, and graphite flake, and may be preferably plate-like graphite.

In an exemplary embodiment of the present specification, the planar conductive material may have an average particle diameter (D50) of 2 $\mu$m to 7 $\mu$m, specifically 3 $\mu$m to 6 $\mu$m, and more specifically 4 $\mu$m to 5 $\mu$m. When the average particle diameter satisfies the above range, sufficient particle size facilitates dispersion without causing an excessive increase in viscosity of the negative electrode slurry. Therefore, the dispersion effect is excellent when particles are dispersed using the same equipment and time.

In an exemplary embodiment of the present specification, the planar conductive material may have a D10 of 0.5 $\mu$m or more and 1.7 $\mu$m or less, a D50 of 2.5 $\mu$m or more and 3.5 $\mu$m or less, and a D90 of 6.8 $\mu$m or more and 15.0 $\mu$m or less.

In an exemplary embodiment of the present specification, as the planar conductive material, it is possible to use a high specific surface area planar conductive material having a high BET specific surface area; or a low specific surface area planar conductive material.

In an exemplary embodiment of the present specification, as the planar conductive material, a high specific surface area planar conductive material; or a low specific surface area planar conductive material may be used without limitation, but in particular, the planar conductive material according to the present specification may be affected by the dispersion effect to some extent in the electrode performance, so that it may be particularly desirable to use a low specific surface area planar conductive material that does not cause a problem in dispersion.

In an exemplary embodiment of the present specification, the planar conductive material may have a BET specific surface area of 5 m$^2$/g or more.

In another exemplary embodiment, the planar conductive material may have a BET specific surface area of 5 m$^2$/g or more and 500 m$^2$/g or less, preferably 5 m$^2$/g or more and 300 m$^2$/g or less, and more preferably 5 m$^2$/g or more and 250 m$^2$/g or less.

In still another exemplary embodiment, the planar conductive material is a high specific surface area planar conductive material, and the BET specific surface area may satisfy a range of 50 m$^2$/g or more and 500 m$^2$/g or less, preferably 80 m$^2$/g or more and 300 m$^2$/g or less, and more preferably 100 m$^2$/g or more and 300 m$^2$/g or less.

In yet another exemplary embodiment, the planar conductive material is a low specific surface area planar conductive material, and the BET specific surface area may satisfy a range of 5 m$^2$/g or more and 40 m$^2$/g or less, preferably 5 m$^2$/g or more and 30 m$^2$/g or less, and more preferably 5 m$^2$/g or more and 25 m$^2$/g or less.

In an exemplary embodiment of the present specification, the negative electrode conductive material may include a dotted conductive material.

The dotted conductive material means a conductive material that can be used to improve the conductivity of the negative electrode and has conductivity without inducing a chemical change. Specifically, the dotted conductive material may be at least one selected from the group consisting of natural graphite, artificial graphite, carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black in terms of implementing high conductivity and being excellent in dispersibility.

In an exemplary embodiment of the present specification, the dotted conductive material may have a BET specific surface area of 40 m$^2$/g or more and 70 m$^2$/g or less, preferably 45 m$^2$/g or more and 65 m$^2$/g or less, and more preferably 50 m$^2$/g or more and 60 m$^2$/g or less.

In an exemplary embodiment of the present specification, the dotted conductive material may have a particle diameter of 10 nm to 100 nm, preferably 20 nm to 90 nm, and more preferably 20 nm to 60 nm.

The negative electrode conductive material according to the present specification has a completely different configuration from a conductive material applied to the positive electrode. That is, the negative electrode conductive material according to the present application serves to capture a contact point between silicon-based active materials in which the volume expansion of the electrode is very large due to charging and discharging, and the configuration and role thereof are completely different from those of the positive electrode conductive material which imparts partial conductivity while playing a buffer role when roll-pressed.

Further, the negative electrode conductive material according to the present specification is applied to a silicon-based negative electrode active material, and has a completely different configuration from a conductive material applied to a graphite-based active material. That is, the conductive material used for the electrode having the graphite-based active material simply has small particles with respect to the active material, and thus has the characteristics of enhancing the output characteristics and imparting partial conductivity, and the configuration and role thereof are completely different from those of the negative electrode conductive material applied together with the silicon-based negative electrode active material as in the present invention.

In the present specification, "linear conductive material" refers to a conductive material having a one-dimensional (1D) structure with a diameter on the nanometer unit level and a high aspect ratio, or a conductive material having a fibrous structure such as a cylindrical type or a tube type.

In an exemplary embodiment of the present specification, as the linear conductive material, carbon nanotubes (CNTs) may be used, and the carbon nanotubes may be bundle-type carbon nanotubes. The bundle type carbon nanotubes may include a plurality of carbon nanotube units. Specifically, the term 'bundle type' used herein refers to, unless otherwise specified, a secondary shape in the form of a bundle or rope in which a plurality of carbon nanotube units are aligned side by side in such an orientation that longitudinal axes of the carbon nanotube units are substantially the same, or are entangled. In the carbon nanotube unit, a graphite sheet has a cylindrical shape with a nano-sized diameter and has a $sp^2$ bond structure. In this case, the carbon nanotube unit may exhibit characteristics of a conductor or semiconductor depending on a structure and an angle at which the graphite sheet is rolled. The bundle type carbon nanotubes may be uniformly dispersed during the preparation of a negative electrode compared to entangled type carbon nanotubes, and the conductivity of the negative electrode may be improved by smoothly forming a conductive network in the negative electrode.

In an exemplary embodiment of the present specification, the linear conductive material may have a BET specific surface area of 100 $m^2$/g or more and 10,000 $m^2$/g or less, preferably 500 $m^2$/g or more and 5,000 $m^2$/g or less, and more preferably 1,000 $m^2$/g or more and 1,500 $m^2$/g or less.

Furthermore, in an exemplary embodiment of the present specification, the linear conductive material may have an aspect ratio of 500 or more, preferably 1,000 or more, and more preferably 10,000 or more, and may have an aspect ratio of 1,000,000 or less, preferably 100,000 or less.

In an exemplary embodiment of the present specification, when the linear conductive material satisfies the above BET specific surface area and aspect ratio ranges, the conductive network structure of the electrode is stably maintained, so that there is an effect of stably exhibiting the charge and discharge capacity.

In an exemplary embodiment of the present specification, the negative electrode binder may include at least one selected from the group consisting of a polyvinylidene fluoride-hexafluoropropylene copolymer (PVDF-co-HFP), polyvinylidene fluoride, polyacrylonitrile, polymethylmethacrylate, polyacrylamide, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The negative electrode binder according to an exemplary embodiment of the present specification plays a role of supporting the active material and the conductive material in order to prevent the distortion and structural deformation of the negative electrode structure in the volume expansion and relaxation of the silicon-based active material, and when the above role is satisfied, all general binders can be applied, specifically, it is possible to include one or more binders selected from the group consisting of polyacrylamide (PAM) and styrene butadiene rubber.

In an exemplary embodiment of the present specification, the negative electrode binder may be present in an amount of 1 part by weight or more and 30 parts by weight or less, specifically 1 part by weight or more and 20 parts by weight or less, and more specifically 3 parts by weight or more and 10 parts by weight or less, based on total 100 parts by weight of the negative electrode active material layer.

In an exemplary embodiment of the present invention, the negative electrode binder may have a weight average molecular weight of 100,000 g/mol or more and 1,500,000 g/mol or less.

When the weight average molecular weight of the negative electrode binder satisfies the above range, the electrode has excellent adhesion strength characteristics because the mechanical strength is excellent and the interaction between molecules is high. In addition, when the above range is satisfied, the viscosity of the binder may be selected within an appropriate range, so that when a negative electrode is manufactured using the same, the coatability of the electrode may be further improved.

The pre-lithiated negative electrode according to an exemplary embodiment of the present specification includes a negative electrode current collector layer; and a negative electrode active material layer provided on at least one surface of the negative electrode current collector layer, and may be manufactured by the above-described manufacturing method. The negative electrode active material layer may include the negative electrode active material. Furthermore, the negative electrode active material layer may further include a thickener.

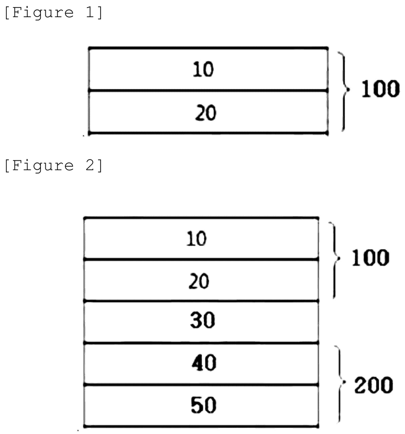

FIG. 1 is a view illustrating the stacking structure of a pre-lithiated negative electrode according to an exemplary embodiment of the present specification. Specifically, it is possible to confirm a pre-lithiated negative electrode 100 including a negative electrode active material layer 20 on one surface of a negative electrode current collector layer 10, and although FIG. 1 shows that the negative electrode active material layer 20 is formed on one surface of the negative electrode current collector layer 10, the negative electrode active material layer 20 may be formed on both surfaces of the negative electrode current collector layer 10. Further, although not illustrated in FIG. 1, the negative electrode active material layer 20 is pre-lithiated.

In an exemplary embodiment of the present specification, the negative electrode current collector layer may generally have a thickness of 1 $\mu$m to 100 $\mu$m. The negative electrode current collector layer is not particularly limited as long as the negative electrode current collector layer has high conductivity without causing a chemical change in the battery, and for example, it is possible to use copper, stainless steel, aluminum, nickel, titanium, fired carbon, copper or stainless steel of which the surface is treated with carbon, nickel, titanium, silver, and the like, an aluminum-cadmium alloy, and the like. In addition, the negative electrode current collector layer may also increase the bonding strength of a negative electrode active material by forming fine irregularities on the surface thereof, and the negative electrode current collector layer may be used in various forms such as a film, a sheet, a foil, a net, a porous body, a foam body, and a non-woven fabric body.

In an exemplary embodiment of the present specification, the negative electrode current collector layer has a thickness of 1 $\mu$m to 100 $\mu$m, and the negative electrode may have a thickness of 20 $\mu$m to 500 $\mu$m. However, the thickness may be variously modified depending on the types and uses of the negative electrode active material, conductive material, binder, and the like used, and is not limited thereto.

The negative electrode active material layer may be formed by coating at least one surface of the negative electrode current collector layer with a negative electrode slurry including the negative electrode active material, the negative electrode binder, the negative electrode conductive material, and/or the thickener described above, which means that the negative electrode active material layer may be formed by applying the negative electrode slurry to at least one surface of the negative electrode current collector layer, and drying and rolling the negative electrode current collector layer.

In an exemplary embodiment of the present specification, the negative electrode slurry may include a negative electrode active material layer composition including the negative electrode active material, a negative electrode binder, a negative electrode conductive material, and/or a thickener; and a slurry solvent.

In an exemplary embodiment of the present specification, a solid content of the negative electrode slurry may satisfy 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean the content of the negative electrode active material layer composition included in the negative electrode slurry, and may mean the content of the negative electrode active material layer composition based on 100 parts by weight of the negative electrode slurry.

When the solid content of the negative electrode slurry satisfies the above range, it is possible to efficiently form a negative electrode active material layer by minimizing the particle aggregation phenomenon of the negative electrode active material layer composition because the viscosity is suitable during the formation of the negative electrode active material layer.

In an exemplary embodiment of the present specification, the solvent may include those known in the art. For example, the solvent may be water (for example: distilled water) or N-methyl-2-pyrrolidone (NMP).

The negative electrode according to an exemplary embodiment of the present specification may be formed by coating one or both surfaces of a negative electrode current collector layer with the negative electrode slurry and drying the coating, and the slurry solvent in the negative electrode slurry may be dried through the drying step.

The lithium secondary battery according to an exemplary embodiment of the present specification may include a positive electrode; the pre-lithiated negative electrode described above; a separator provided between the positive electrode and the pre-lithiated negative electrode; and an electrolyte solution.

Furthermore, in an exemplary embodiment of the present specification, the lithium secondary battery for the lithium secondary battery using a pre-lithiated negative electrode immediately after the completion of pre-lithiation as the negative electrode and the lithium secondary battery using a pre-lithiated negative electrode exposed to air having a moisture content of less than 1.0 ppm for 7 days after the completion of pre-lithiation as the negative electrode have a discharge capacity ratio of 1 : 0.99 to 1 : 1 after 50 charge-discharge cycles for the lithium secondary battery, and in this case, the charge and discharge cycles may be performed by setting the C-rate to 0.5 C, setting charging at an upper limit voltage of 4.2 V, a constant current/constant voltage mode (CC/CV mode) and a cut-off current of 0.05 C, and setting discharging at a lower limit voltage of 3.0 V and a constant current mode (CC mode).

That is, the lithium secondary battery according to an exemplary embodiment of the present specification has improved air stability, and thus is characterized by having almost no change in capacity during the progress of charge and discharge cycles, even when a silicon-based negative electrode exposed to dry air for a certain period of time after the completion of pre-lithiation is used.

Since the pre-lithiated negative electrode has been previously described, a specific description thereof will be omitted.

FIG. 2 is a view illustrating the stacking structure of a lithium secondary battery according to an exemplary embodiment of the present specification. Specifically, it is possible to confirm a pre-lithiated negative electrode 100 including a negative electrode active material layer 20 on one surface of a negative electrode current collector layer 10 and to confirm a positive electrode 200 including a positive electrode active material layer 40 on one surface of a positive electrode current collector layer 50, it is shown that the pre-lithiated negative electrode 100 and the positive electrode 200 are formed in a structure in which the electrodes are stacked with a separator 30 interposed therebetween, and in this case, the pre-lithiated negative electrode may be manufactured by the manufacturing method according to an exemplary embodiment of the present specification.

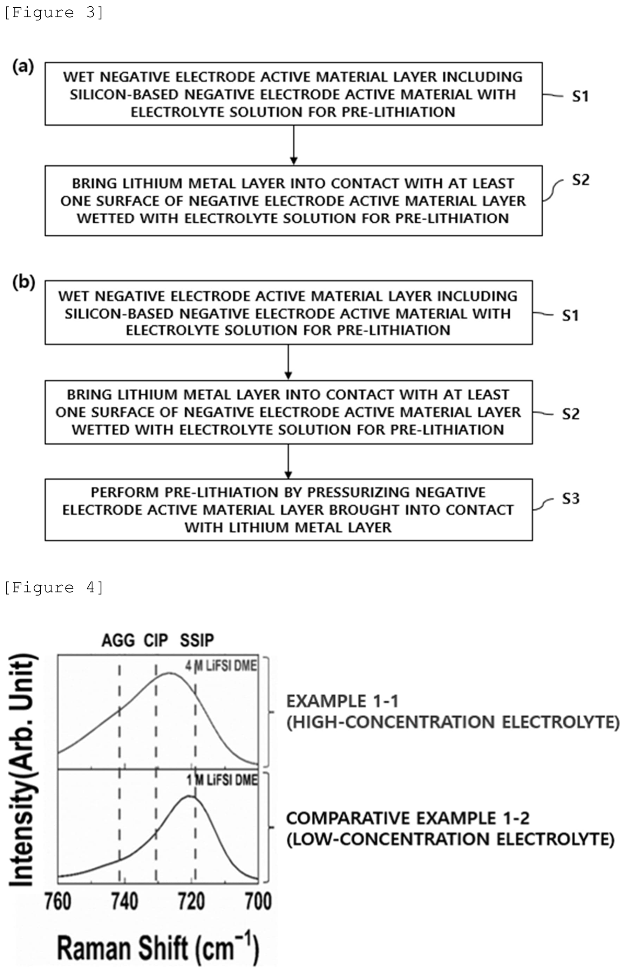

FIG. 3 is a view illustrating a method for manufacturing a pre-lithiated negative electrode according to an exemplary embodiment of the present specification as a flow-chart. Specifically, FIG. 3A illustrates a method for manufacturing a pre-lithiated negative electrode, the method including: wetting a negative electrode active material layer including a silicon-based negative electrode active material with an electrolyte solution for pre-lithiation (S1); and bringing the negative electrode active material layer wetted with the electrolyte solution for pre-lithiation into contact with a lithium metal layer (S2).

FIG. 3B illustrates a method for manufacturing a pre-lithiated negative electrode, the method including: wetting a negative electrode active material layer including a silicon-based negative electrode active material with an electrolyte solution for pre-lithiation (S1); bringing the negative electrode active material layer wetted with the electrolyte solution for pre-lithiation into contact with a lithium metal layer (S2); and performing pre-lithiation by pressurizing the negative electrode active material layer brought into contact with the lithium metal layer (S3).

In this case, the method for manufacturing a pre-lithiated negative electrode according to an exemplary embodiment of the present specification may further include providing a negative electrode active material layer on at least one surface of the negative electrode current collector layer (not shown), which may be performed at a step prior to S1, but there is no limitation thereon.

The positive electrode may include a positive electrode current collector layer and a positive electrode active material layer formed on at least one surface of the positive electrode current collector layer and including the positive electrode active material.

In the positive electrode, the positive electrode current collector layer is not particularly limited as long as the positive electrode current collector layer has conductivity without causing a chemical change to the battery, and for example, it is possible to use stainless steel, aluminum, nickel, titanium, fired carbon, or aluminum or stainless steel whose surface is treated with carbon, nickel, titanium, silver, and the like. Alternatively, the positive electrode current collector layer may typically have a thickness of 3 $\mu$m to 500 $\mu$m, and the adhesion of the positive electrode active material may also be enhanced by forming fine irregularities on the surface of the current collector layer. For example, the positive electrode current collector layer may be used in various forms such as a film, a sheet, a foil, a net, a porous body, a foam body, or a non-woven fabric body.

The positive electrode active material according to an exemplary embodiment of the present specification may include one or more selected from the group consisting of lithium manganese oxide, lithium cobalt oxide, lithium nickel oxide, lithium iron oxide, lithium aluminum oxide, or a lithium composite oxide formed by combining these.

Specifically, the positive electrode active material includes: a layered compound such as lithium cobalt oxide ($LiCoO_2$) and lithium nickel oxide ($LiNiO_2$) or a compound substituted with one or more transition metals; a lithium iron oxide such as $LiFe_3O_4$; a lithium manganese oxide such as chemical formula $Li_{1+c1}Mn_{2-c1}O_4$ ( $0 \leq c1 \leq 0.33$), $LiMnO_3$, $LiMn_2O_3$, and $LiMnO_2$; a lithium copper oxide ($Li_2CuO_2$); a vanadium oxide such as $LiV_3O_8$, $V_2O_5$, and $Cu_2V_2O_7$; a Ni site type lithium nickel oxide expressed as chemical formula $LiNi_{1-c2}M_{c2}O_2$ (here, M is at least one selected from the group consisting of Co, Mn, Al, Cu, Fe, Mg, B and Ga, and c2 satisfies $0.01 \leq c2 \leq 0.5$); a lithium manganese composite oxide expressed as chemical formula $LiMn_{2-c3}M_{c3}O_2$ (here, M is at least any one selected from the group consisting of Co, Ni, Fe, Cr, Zn and Ta, and c3 satisfies $0.01 \leq c3 \leq 0.1$) or $Li_2Mn_3MO_8$ (here, M is at least any one selected from the group consisting of Fe, Co, Ni, Cu and Zn.); $LiMn_2O_4$ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change in a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Alternatively, the positive electrode binder serves to improve the bonding between positive electrode active material particles and the adhesion between the positive electrode active material and the positive electrode current collector. Specific examples thereof may include polyvinylidene fluoride (PVdF), a polyvinylidene fluoride-hexafluoropropylene copolymer (PVdF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, styrene-butadiene rubber (SBR), fluorine rubber, or various copolymers thereof, and any one thereof or a mixture of two or more thereof may be used.

The solvent used in the positive electrode composition slurry may be a solvent commonly used in the art, examples thereof include dimethyl sulfoxide (DMSO), isopropyl alcohol, N-methylpyrrolidone (NMP), acetone, water, or the like, and among them, any one thereof or a mixture of two or more thereof may be used. The amount of solvent used is sufficient as long as the solvent in the amount dissolves or disperses the active material, conductive material, and binder in consideration of the application thickness and preparation yield of the slurry, and has a viscosity capable of exhibiting excellent thickness uniformity during subsequent application for manufacturing the positive electrode and the negative electrode. Alternatively, by another method, the positive electrode and the negative electrode may be manufactured by casting the composition for forming an active material layer on a separate support and then laminating a film obtained by performing peel-off from the support on a current collector.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte solution as well as low resistance to ion movement in the electrolyte solution is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte solution include an organic liquid electrolyte solution, an inorganic liquid electrolyte solution, a solid polymer electrolyte solution, a gel-type polymer electrolyte solution, a solid inorganic electrolyte solution, a molten-type inorganic electrolyte solution, and the like, which can be used in the preparation of a lithium secondary battery, but are not limited thereto.

Specifically, the electrolyte solution may include a non-aqueous organic solvent and a metal salt.

As the non-aqueous organic solvent, it is possible to use, for example, an aprotic organic solvent, such as N-methyl-2-pyrrolidone, propylene carbonate, ethylene carbonate, butylene carbonate, dimethyl carbonate, diethyl carbo-nate, ethyl methyl carbonate, $\gamma$-butyrolactone, 1,2-dimethoxyethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates such as ethylene carbonate and propylene carbonate may be preferably used because the cyclic carbonates have high permittivity as organic solvents of a high viscosity and thus dissociate a lithium salt well, and such a cyclic carbonate may be more preferably used since the cyclic carbonate may be mixed with a linear carbonate of a low viscosity and low permittivity such as dimethyl carbonate and diethyl carbonate in an appropriate ratio and used to prepare an electrolyte solution having a high electric conductivity.

As the metal salt, a lithium salt may be used, the lithium salt is a material which is easily dissolved in the non-aqueous electrolyte solution, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In an exemplary embodiment of the present specification, the above-described ether-based solvent and lithium salt are used as components of the electrolyte solution for pre-lithiation of the negative electrode active material layer, and have a different role from the commonly used carbonate-based organic solvent and lithium salt.

In the electrolyte solution, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexamethylphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte solution constituent components.

The battery module according to an exemplary embodiment of the present specification may include the above-described lithium secondary battery.

The battery pack according to another exemplary embodiment of the present specification may include the above-described lithium secondary battery or a battery module including the above-described lithium secondary battery.

Since the lithium secondary battery according to exemplary embodiments of the present specification stably exhibits excellent discharge capacity, output characteristics, and cycle performance, the lithium secondary battery may be used as a power source for portable devices such as mobile phones, notebook-sized computers and digital cameras, and medium-and-large sized devices selected from the group consisting of electric vehicles, hybrid electric vehicles, plug-in hybrid electric vehicles, and power storage systems. For example, the battery module or battery pack may be used as a power source for one or more medium-and-large sized devices of a power tool; an electric vehicle including an electric vehicle (EV), a hybrid electric vehicle and a plug-in hybrid electric vehicle (PHEV); and a power storage system.

[Mode for Invention]

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

## Preparation Example 1

Example 1-1

### <Preparation of negative electrode>

A negative electrode active material layer composition was prepared using Si (average particle diameter (D50): 5 $\mu$m) as a negative electrode active material, platelike graphite as a conductive material, and a polyacrylamide binder at a weight ratio of 80:10:10. A negative electrode slurry was prepared by adding the negative electrode active material layer composition to distilled water as a solvent for forming a negative electrode slurry.

After the conductive material, the binder and water were dispersed at 2500 rpm for 30 minutes using a homo mixer as a mixing method, an active material was added thereto, and then the resulting mixture was dispersed at 2500 rpm for 30 minutes to prepare a negative electrode slurry.

Both surfaces of a copper current collector (thickness: 8 $\mu$m) as a negative electrode current collector were coated with the negative electrode slurry in a capacity of 11.5 mAh/cm$^2$, and the copper current collector was roll-pressed and dried in a vacuum oven at 130°C for 10 hours to form a negative electrode (diameter: 12 $\mu$m) for manufacturing a coin cell.

### <Pre-lithiation>

The negative electrode (diameter: 12 mm) was wetted with a solution for pre-lithiation, having a composition according to Example 1-1 in the following Table 1 (lithium salt LiFSI at a concentration of 4 M and solvent dimethoxyethane (DME)) for 12 hours, and then placed in a coin cell part in a state where a stack for pre-lithiation (diameter: 12 mm) including a lithium metal layer (thickness: 6.2 $\mu$m) and a PET substrate layer was brought into contact with each other. In this case, no spring parts were placed in order to transmit pressure through the hot press, and three spacers having a thickness of 1 mm and a solution for pre-lithiation having the composition shown in the following Table 1 were placed in the coin cell, and the coin cell was compressed using a hot press method to manufacture a pre-lithiated negative electrode with a capacity of 1.24 mAh/cm$^2$.

**<Manufacture of coin-full cell>**

A positive electrode slurry was prepared by adding $Li[Ni_{0.8}Co_{0.1}Mn_{0.1}]O_2$ (diameter: 10 mm) as a positive electrode active material, carbon black (product name: Super C65, manufacturer: Timcal) as a conductive material, and polyvinylidene fluoride (PVdF) as a binder at a weight ratio of 96:2:2 to N-methyl-2-pyrrolidone (NMP) as a solvent for forming a positive electrode slurry.

Both surfaces of an aluminum current collector (thickness: 12 $\mu$m) as a positive electrode current collector were coated with the positive electrode slurry in a capacity of 4.0 $mAh/cm^2$, and the aluminum current collector was roll-pressed and dried in a vacuum oven at 130°C for 10 hours to form a positive electrode active material layer, thereby manufacturing a positive electrode for manufacturing a coin cell (diameter: 10 mm).

A PP2400 separator (diameter: 18 mm) manufactured by Celgard LLC was interposed between the positive electrode and the pre-lithiated negative electrode, and an electrolyte solution was injected to manufacture a coin-full cell of Example 1-1 in a glove box under an argon (Ar) atmosphere.

The electrolyte solution is an electrolyte solution prepared by adding $LiPF_6$ as a lithium salt at a concentration of 1 M to an organic solvent in which ethylene carbonate (EC) and diethyl carbonate (DEC) are mixed at a volume ratio of 50:50.

**Comparative Example 1-1**

A coin-full cell was manufactured in the same manner as in the manufacturing method in Example 1-1, except that pre-lithiation was performed at a capacity of 1.24 $mAh/cm^2$ by transferring lithium metal (thickness: 6.2 $\mu$m) (dry pre-lithiation) to the Si negative electrode in Example 1-1.

**Comparative Example 1-2**

A coin-full cell was manufactured in the same manner as in the manufacturing method in Example 1-1, except that pre-lithiation was performed using an electrolyte solution for pre-lithiation, having the composition according to Comparative Example 1-2 of the following Table 1.

[Table 1]

| Electrolyte solution composition for pre-lithiation | | |
|---|---|---|
| | Solvent | Lithium salt |
| Comparative Example 1-1 | Not used (dry) | |
| Comparative Example 1-2 | Dimethoxyethane (DME) | 1 M LiFSI |
| Example 1-1 | Dimethoxyethane (DME) | 4 M LiFSI |

**Experimental Example 1-1: Raman Spectroscopy of Electrolyte Solution for Pre-Lithiation**

In order to confirm the solvation structure according to the concentration of an electrolyte solution for pre-lithiation, the electrolyte solutions for pre-lithiation used in Comparative Example 1-2 and Example 1-1 were observed by Raman spectroscopy, and the results are shown in FIG. 4.

In this case, Raman spectroscopy was measured using a Raman spectrometer (DXR2xi, Thermo Fisher, USA). To measure the Raman spectra of various electrolyte solutions, a 2 mL vial was filled with each electrolyte solution without air bubbles, and then Raman analysis was performed in a range of 700 $cm^{-1}$ to 760 $cm^{-1}$.

Referring to FIG. 4, it can be confirmed that in the electrolyte solution for pre-lithiation of Comparative Example 1-2, the SSIP structure is shown to be the highest, and in the electrolyte solution for pre-lithiation of Example 1-1, an AGG structure and a CIP structure are developing, and in particular, it can be confirmed that the CIP structure is shown to be the highest.

As described above, the negative electrode of Example 1-1 using an electrolyte solution for pre-lithiation with a CIP structure at a high concentration forms an artificial SEI layer rich in LiF components, so that a lithium secondary battery with improved air stability in dry air may be manufactured. It can be confirmed through the following Experimental Example 1-2 whether the air stability of the lithium secondary battery in dry air is improved.

**Experimental Example 1-2: Evaluation of stability in dry air**

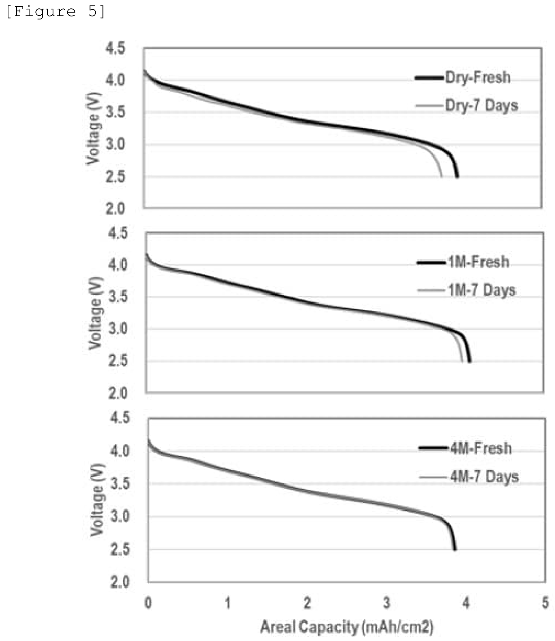

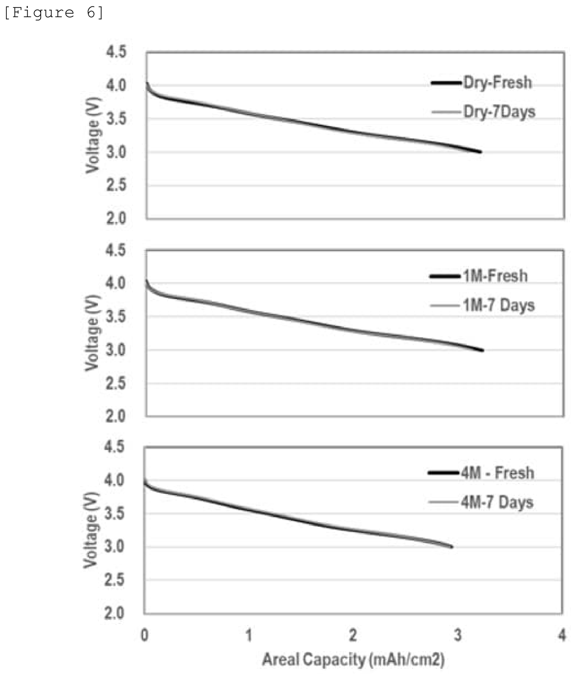

In order to evaluate the air stability of the electrolyte solution for pre-lithiation, charge and discharge cycles were performed on each of the coin-full cells of Example 1-1, Comparative Examples 1-1 and 1-2 (hereinafter, referred to as non-exposed coin-full cells and indicated as "Fresh" in FIGS. 5 and 6) in which coin-full cells were assembled without air exposure immediately after the completion of the pre-lithiation of the negative electrode and the coin-full cells of Example 1-1 and Comparative Examples 1-1 and 1-2 (hereinafter, referred to as 7-day exposure coin-full cells and indicated as "7 Days" in FIGS. 5 and 6) in which coin-full cells were assembled after exposure to dry air for 7 days before cell assembly after the completion of the pre-lithiation.

In this case, the negative electrodes exposed to dry air for 7 days after pre-lithiation were stored for 7 days in an environment simulating a dry room (moisture less than 1.0 ppm) by collecting the pre-lithiated negative electrodes in a glove box under an argon (Ar) atmosphere, placing the pre-lithiated negative electrodes in vials, injecting dry air from the outside and removing the argon (Ar).

In addition, the conditions for the first cycle charge and discharge were charged CC/CV mode, 0.1 C, 2.5 V to 4.2 V, 0.05 C cut-off, discharge CC mode, 0.1 C, and 2.5 V to 4.2 V, and the charge and discharge conditions during the 50th cycle charge and discharge were charged CC/CV mode, 0.5 C, 3.0 V to 4.2 V, 0.05 C cut-off, discharge CC mode, 0.5 C, and 3.0 V to 4.2 V.

For each case, the discharge curve in the first charge and discharge cycle is shown in FIG. 5, and the discharge capacities in the first charge and discharge cycle were measured and are shown in the following Table 2.

Furthermore, the capacity ratio between the unexposed coin-full cell and the 7-day exposed coin-full cell in each case was calculated using the following equation, and is shown in the following Table 2.

Likewise, the discharge curves after the 50th charge and discharge cycle for each case are shown in FIG. 6, and the capacity ratios between the unexposed coin-full cell and the 7-day exposed coin-full cell calculated from the measured discharge capacities and the discharge capacities for each case using the following equation are shown in the following Table 3.

$$\text{Capacity ratio} = \frac{(\text{Discharge capacity of 7-day exposed coin-full cell})}{(\text{Discharge capacity of unexposed coin-full cell})}$$

[Table 2]

|  | Comparative Example 1-1 | Comparative Example 1-2 | Example 1-1 |
|---|---|---|---|
| Capacity@1st Cycle (mAh/cm$^2$) (Unexposed) | 3.94 | 4.07 | 3.85 |
| Capacity@1st Cycle (mAh/cm$^2$) (7-Day exposed) | 3.74 | 3.97 | 3.83 |
| Capacity Ratio@1st Cycle (-) (7-day exposed/unexposed) | 0.950 | 0.976 | 0.994 |

[Table 3]

|  | Comparative Example 1-1 | Comparative Example 1-2 | Example 1-1 |
|---|---|---|---|
| Capacity@50th Cycle (mAh/cm$^2$) (unexposed) | 3.19 | 3.22 | 2.94 |
| Capacity@50th Cycle (mAh/cm$^2$) (7-day exposed) | 3.08 | 3.13 | 2.93 |
| Capacity Ratio@50th Cycle (-) (7-day exposed/unexposed) | 0.964 | 0.969 | 0.997 |

Referring to Table 2 and FIG. 5 above, it could be confirmed that the capacity ratio of the coin-full cell of Example 1-1 using a pre-lithiated negative electrode in a 4 M LiFSI DME electrolyte solution was closest to 1, compared to the coin full cell of Comparative Example 1-1 using a dry pre-lithiated negative electrode in which an electrolyte solution for pre-lithiation was not used and the coin full cell of Comparative Example 1-2 using a pre-lithiated negative electrode in a 1 M LiFSI DME electrolyte solution. That is, since the coin-full cell of Example 1-1 of the present invention has the best air stability, it could be seen that even after being stored in dry air for 7 days, the coin-full cell exhibited almost the same discharge capacity as when the coin-full cell was not exposed to dry air.

Likewise, referring to Table 3 and FIG. 6 above, it could be confirmed that even when the 50 charge and discharge cycles were performed, the coin-full cell of Example 1-1 using a pre-lithiated negative electrode in a 4 M LiFSI DME electrolyte solution showed almost the same discharge capacity as when the coin-full cell was not exposed to dry air even when being stored in dry air for 7 days, compared to the coin-full cells of Comparative Examples 1-1 and 1-2.

## Preparation Example 2

Example 2-1

An electrolyte solution for pre-lithiation having the same composition as the composition of the electrolyte solution for pre-lithiation used during the pre-lithiation in Example 1-1 of Table 1 above (lithium salt LiFSI at a concentration of 4 M and solvent dimethoxyethane (DME)) was prepared.

## Reference Example 2-1

An electrolyte solution for pre-lithiation was prepared in the same manner as in the preparation method of Example 2-1, except that a lithium salt LiFSI at a concentration of 3 M and a solvent dimethoxyethane (DME) were used.

## Reference Example 2-2

An electrolyte solution for pre-lithiation was prepared in the same manner as in the preparation method of Example 2-1, except that a lithium salt LiFSI at a concentration of 2 M and a solvent dimethoxyethane (DME) were used.

## Reference Example 2-3

An electrolyte solution for pre-lithiation was prepared in the same manner as in the preparation method of Example 2-1, except that a lithium salt LiFSI at a concentration of 1 M and a solvent dimethoxyethane (DME) were used.

## Comparative Example 2-1

An electrolyte solution for pre-lithiation was prepared in the same manner as in the preparation method of Example 2-1, except that 10 wt% of fluoroethylene carbonate (FEC) as an additive and $LiPF_6$ as a lithium salt at a concentration of 4 M were added to an organic solvent in which ethylene carbonate (EC) and diethyl carbonate (DEC) were mixed at a volume ratio of 50:50.

## Comparative Example 2-2

An electrolyte solution for pre-lithiation was prepared in the same manner as in the preparation method of Comparative Example 2-1, except that $LiPF_6$ was added as a lithium salt at a concentration of 3 M.

## Comparative Example 2-3

An electrolyte solution for pre-lithiation was prepared in the same manner as in the preparation method of Comparative Example 2-1, except that $LiPF_6$ was added as a lithium salt at a concentration of 2 M.

## Comparative Example 2-4

An electrolyte solution for pre-lithiation was prepared in the same manner as in the preparation method of Comparative Example 2-1, except that $LiPF_6$ was added as a lithium salt at a concentration of 1 M.

## Experimental Example 2-1: Evaluation of ionic conductivity of electrolyte solution for pre-lithiation

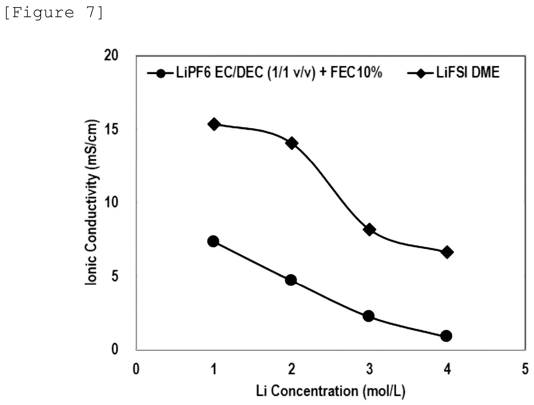

In order to confirm the change in ionic conductivity according to the concentration of the electrolyte solution for pre-lithiation when a carbonate-based solvent and a lithium salt $LiPF_6$ were used and when the ether-based solvent of the present invention and a lithium salt LiFSI were used, the ionic conductivities of the electrolyte solutions for pre-lithiation in Example 2-1, Reference Examples 2-1 to 2-3, and Comparative Examples 2-1 to 2-4 were measured, and are shown in the following Table 4 and FIG. 7.

Specifically, the ionic conductivity of the electrolyte solution for pre-lithiation was measured using a METTLER TOLEDO Seven Direct SD30 ionic conductivity measuring device.

[Table 4]

| Lithium salt concentration (M) | Ion conductivity (mS/cm) | | | |
| --- | --- | --- | --- | --- |
| | EC/DEC (1/1 v/v) + FEC 10 wt%<br>Lithium salt LiPF$_6$ | | DME<br>Lithium salt LiFSI | |
| 4 | Comparative Example 2-1 | 0.9 | Example 2-1 | 6.6 |
| 3 | Comparative Example 2-2 | 2.2 | Reference Example 2-1 | 8.2 |
| 2 | Comparative Example 2-3 | 4.7 | Reference Example 2-2 | 14.0 |
| 1 | Comparative Example 2-4 | 7.3 | Reference Example 2-3 | 15.4 |

Referring to Table 4 and FIG. 7, it could be confirmed that the electrolyte solution for pre-lithiation in Comparative Example 2-4 at a concentration of 1 M exhibited an ionic conductivity of 7.3 mS/cm, the ionic conductivity decreased more and more as the concentration increased, and the electrolyte solution for pre-lithiation in Comparative Example 2-1 at a concentration of 4 M exhibited a significant decrease to 0.9 mS/cm. However, it could be confirmed that the electrolyte solution for pre-lithiation in Example 2-1 exhibited a relatively high ionic conductivity of 6.6 mS/cm even when the lithium salt concentration was increased to 4 M, thereby confirming that the electrolyte solution reached about 90.4% of the ionic conductivity of Comparative Example 2-4 at a concentration of 1 M, which exhibited the highest ionic conductivity.

Through this, it can be confirmed that, in general, as the concentration of lithium salt increases, the viscosity of the electrolyte solution for pre-lithiation also increases, and the diffusion rate of lithium ions may decrease, but it can be seen that this tendency is more pronounced when a carbonate-based solvent is used as the solvent for the electrolyte solution for pre-lithiation. However, it can be seen that the electrolyte solution for pre-lithiation according to an exemplary embodiment of the present specification may secure high ionic conductivity despite the high concentration thereof by using a non-aqueous solvent, particularly an ether-based solvent, together with a specific lithium salt, specifically LiFSI.

**Experimental Example 2-2: Evaluation of C-rate characteristics of electrolyte solution for pre-lithiation**

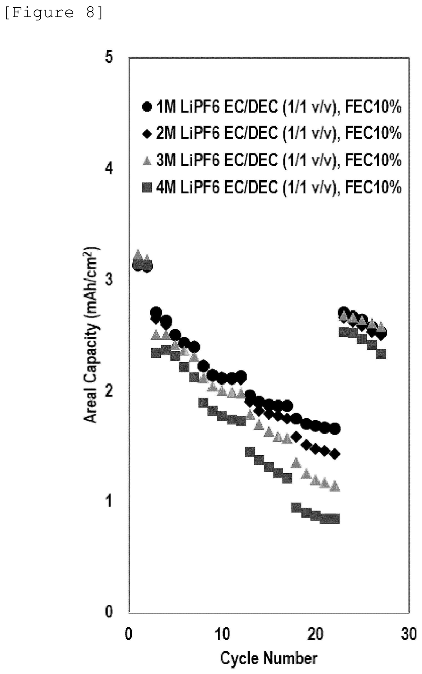

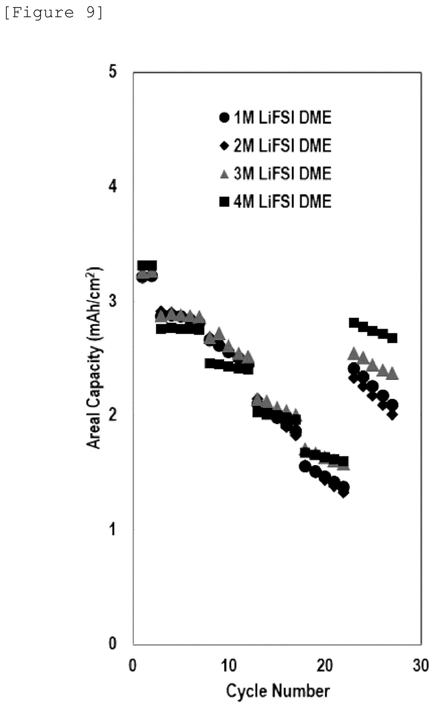

In order to evaluate the C-rate characteristics according to the combination of the solvent and lithium salt of the electrolyte solution for pre-lithiation, coin-half cells were manufactured using the electrolyte solutions for pre-lithiation of Example 2-1, Reference Examples 2-1 to 2-3, and Comparative Examples 2-1 to 2-4 and a micron silicon negative electrode, and the changes in capacity for each C-rate were measured, and are shown in FIGS. 8 and 9.

In this case, for the micron silicon negative electrode, a negative electrode active material layer composition was prepared using Si (average particle diameter (D50): 5 $\mu$m) as a negative electrode active material, SWCNTs as a conductive material, styrene-butadiene rubber (SBR) and a carboxymethyl cellulose (CMC) binder at a weight ratio of 80:0.5:12.5:7. A negative electrode slurry was prepared by adding the negative electrode active material layer composition to distilled water as a solvent for forming a negative electrode slurry.

After the active material, the conductive material, the CMC binder, and water were dispersed at 1600 rpm for 40 minutes using a paste mixer as a mixing method, SBR was added thereto, and then the resulting mixture was dispersed at 1600 rpm for 3 minutes to prepare a negative electrode slurry.

Both surfaces of a copper current collector (thickness: 19 $\mu$m) as a negative electrode current collector were coated with the negative electrode slurry at a capacity of 3.9 mAh/cm$^2$, and the copper current collector was roll-pressed and dried in a vacuum oven at 120°C for 7 hours to form a negative electrode (diameter: 13 mm) for manufacturing a coin cell.

A coin-half cell was manufactured by using the micron silicon negative electrode manufactured above as a working electrode and a 1 mm-thick lithium metal foil cut into a circle of 1.7671 cm$^2$ as a counter electrode, interposing a polyethylene separator between the working electrode and the counter electrode to house the separator in a coin-type case, and injecting 50 $\mu$L of an electrolyte solution. In this case, as the electrolyte solutions, the electrolyte solutions for pre-lithiation in Example 2-1, Reference Examples 2-1 to 2-3, and Comparative Examples 2-1 to 2-4 were used.

For the half cell, CC/CV charge and CC discharge were performed several times using an electrochemical charger and discharger, and the C-rate and cut-off conditions during charge/discharge for each cycle are shown in the following Table 5.

[Table 5]

| Cycle No. | Lithiation | | | Delithiation | |
|---|---|---|---|---|---|
| | CC C-rate | Cut-off V (CC mode) | Cut-off I (CV mode) | CC C-rate | Cut-off V |
| 1 | 0.03 C | 0.01 V | 0.01 C | 0.1 C | 1.5 V |
| 2 | 0.1 C | 0.01 V | 0.01 C | 0.1 C | 1.5 V |
| 3-7 | 0.5 C | 0.06 V | 0.05 C | 0.5 C | 1 V |
| 8-12 | 1C | 0.06 V | 0.05 C | 0.5 C | 1 V |
| 13-17 | 2 C | 0.06 V | 0.05 C | 0.5 C | 1 V |
| 18-22 | 3 C | 0.06 V | 0.05 C | 0.5 C | 1 V |
| 23-27 | 0.5 C | 0.06 V | 0.05 C | 0.5 C | 1 V |

Referring to FIG. 8, it can be confirmed that in the case of Comparative Examples 2-1 to 2-4 using a carbonate-based solvent and a lithium salt $LiPF_6$, the decrease in capacity caused by the increase in lithium salt concentration increases as the C-rate increases.

In contrast, it could be confirmed that in the case of Example 2-1 and Reference Examples 2-1 to 2-3 using the ether-based solvent of the present invention and a lithium salt LiFSI, the C-rate characteristics were shown to be similar even when the lithium salt concentration was increased, and in particular, at a high C-rate of 3 C, the high-concentration Example 2-1 and Reference Example 2-1 showed higher capacity than the low-concentration Reference Examples 2-2 and 2-3.

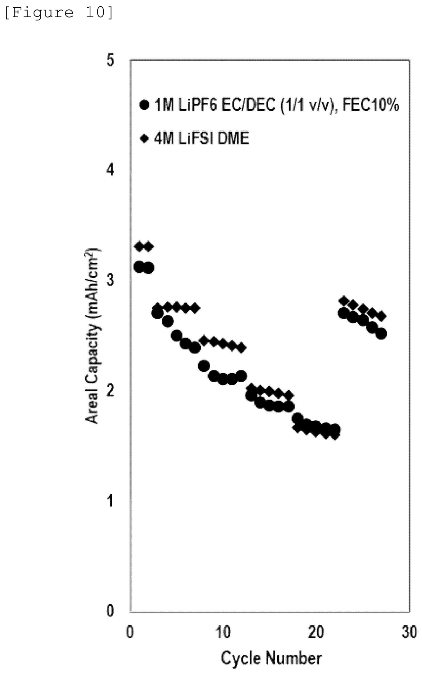

Meanwhile, the C-rate characteristics of the half cell of Example 2-1, which had an ionic conductivity similar to that of Comparative Example 2-4, which exhibited the highest ionic conductivity among the comparative examples of the above-described Experimental Example 2-1, and the C-rate characteristics of the half cell of Comparative Example 2-4 were directly compared, and the direct comparison results are shown in FIG. 10. Referring to FIG. 10, it could be confirmed that although the ionic conductivity of the electrolyte solution for pre-lithiation in Comparative Example 2-4 was slightly higher, the half cell of Example 2-1 exhibited C-rate characteristics equal to or higher than those of Comparative Example 2-4.

Through this, it can be seen that when the electrolyte solution for pre-lithiation according to an exemplary embodiment of the present specification is used, excellent C-rate characteristics are also exhibited due to the characteristics of maintaining high ionic conductivity even when the concentration of the lithium salt is increased.

In conclusion, according to an exemplary embodiment of the present specification, by using a high-concentration electrolyte solution that maintains high ionic conductivity using a combination of a lithium salt at a concentration of more than 3 M and a non-aqueous solvent as an electrolyte solution for pre-lithiation to pre-lithiate a silicon-based negative electrode by a wet method, an artificial SEI layer rich in LiF components may be formed on the surface of the pre-lithiated silicon-based negative electrode, thereby improving air stability to maintain excellent capacity characteristics even during storage in dry air before cell assembly.

[Explanation of Reference Numerals and Symbols]

10: Negative electrode current collector layer
20: Negative electrode active material layer
30: Separator
40: Positive electrode active material layer
50: Positive electrode current collector layer
100: Pre-lithiated negative electrode
200: Positive electrode

**Claims**

1.  A method for manufacturing a pre-lithiated negative electrode, the method including:

    wetting a negative electrode active material layer comprising a silicon-based negative electrode active material with an electrolyte solution for pre-lithiation; and
bringing a lithium metal layer into contact with at least one surface of the negative electrode active material layer wetted with the electrolyte solution for pre-lithiation,
wherein the electrolyte solution for pre-lithiation comprises a lithium salt at a concentration of more than 3 M and a non-aqueous solvent.

2. The method of claim 1, wherein the lithium salt comprises, as an anion, one or more selected from the group consisting of $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, and a combination thereof.

3. The method of claim 1, wherein an anion of the lithium salt is $(FSO_2)_2N^-$.

4. The method of claim 1, wherein the non-aqueous solvent comprises an ether-based solvent.

5. The method of claim 1, wherein the non-aqueous solvent comprises one or more selected from the group consisting of diethyl ether, dipropyl ether, dibutyl ether, dimethoxymethane, trimethoxymethane, dimethoxyethane, diethoxyethane, dimethoxypropane, dioxolane, methyldioxolane, oxane, dioxane, trioxane, tetrahydrofuran, dihydropyran, tetrahydropyran, methyltetrahydrofuran, furan, methylfuran, diethylene glycol dimethyl ether, triethylene glycol dimethyl ether, tetraethylene glycol dimethyl ether, ethylene glycol divinyl ether, diethylene glycol divinyl ether, triethylene glycol divinyl ether, dipropylene glycol dimethylene ether, butylene glycol ether, and a combination thereof.

6. The method of claim 1, wherein the electrolyte solution for pre-lithiation comprises the lithium salt at a concentration of 4 M or more and a non-aqueous solvent.

7. The method of claim 1, after the bringing of the negative electrode active material layer into contact with the lithium metal layer,
further comprising performing pre-lithiation by pressurizing the negative electrode active material layer brought into contact with the lithium metal layer.

8. The method of claim 1, wherein the silicon-based negative electrode active material comprises one or more selected from the group consisting of Si, silicon oxide, Si/C and a Si alloy.

9. The method of claim 1, wherein the silicon-based negative electrode active material comprises Si, and the Si is comprised in an amount of 60 parts by weight or more based on 100 parts by weight of the silicon-based negative electrode active material.

10. The method of claim 1, wherein the lithium metal layer has a thickness of 1 $\mu$m or more and 10 $\mu$m or less.

11. A pre-lithiated negative electrode comprising a negative electrode current collector layer, and manufactured by the manufacturing method according to any one of claims 1 to 10.

12. A lithium secondary battery comprising:

a positive electrode;
the pre-lithiated negative electrode of claim 11;
a separator provided between the positive electrode and the pre-lithiated negative electrode; and
an electrolyte solution.

13. The lithium secondary battery of claim 12, wherein the lithium secondary battery using a pre-lithiated negative electrode immediately after the completion of pre-lithiation as the negative electrode and the lithium secondary battery using a pre-lithiated negative electrode exposed to air having a moisture content of less than 1.0 ppm for 7 days after the completion of pre-lithiation as the negative electrode have a discharge capacity ratio of 1 : 0.99 to 1 : 1 after 50 charge-discharge cycles for the lithium secondary battery, and
the charge and discharge cycles are performed by setting the C-rate to 0.5 C, setting charging at an upper limit voltage of 4.2 V, a constant current/constant voltage mode (CC/CV mode) and a cut-off current of 0.05 C, and setting discharging at a lower limit voltage of 3.0 V and a constant current mode (CC mode).

**14.** A battery module comprising the lithium secondary battery according to claim 12.

**15.** A battery pack comprising the lithium secondary battery according to claim 12.

**16.** A battery pack comprising the battery module according to claim 14.

[Figure 1]

[Figure 2]

[Figure 3]

[Figure 4]

[Figure 5]

[Figure 6]

[Figure 7]

[Figure 8]

[Figure 9]

[Figure 10]

## INTERNATIONAL SEARCH REPORT

| International application No. |
| --- |
| **PCT/KR2024/020747** |

| A. | CLASSIFICATION OF SUBJECT MATTER |
| --- | --- |

**H01M 4/04**(2006.01)i; **H01M 4/1395**(2010.01)i; **H01M 4/134**(2010.01)i; **H01M 4/38**(2006.01)i; **H01M 4/48**(2010.01)i; **H01M 10/0566**(2010.01)i; **H01M 10/052**(2010.01)i; **H01M 10/44**(2006.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/04(2006.01); H01M 10/04(2006.01); H01M 10/0525(2010.01); H01M 4/13(2010.01); H01M 4/139(2010.01); H01M 4/1391(2010.01); H01M 4/1395(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 음극(anode), 전리튬화 (prelithiation), 실리콘계 음극 활물질(silicon based anode active material), 전해액(electrolyte), 웨팅(wetting), 리튬 금속 (lithium metal), 리튬염(lithium salt), 비수계 용매(non-aqueous solvent), 농도(concentration)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| DY | KR 10-2019-0083304 A (LG CHEM, LTD.) 11 July 2019 (2019-07-11) See claims 1, 2, 5 and 10; and paragraphs [0061], [0069]-[0073], [0079], [0090]-[0093], [0095]-[0099] and [0131]-[0134]. | 1-16 |
| Y | CN 111162246 A (INSTITUTE OF CHEMISTRY, CHINESE ACADEMY OF SCIENCES) 15 May 2020 (2020-05-15) See claims 1, 2, 4, 5, 9 and 10; and paragraphs [0037], [0038], [0045] and [0046]. | 1-16 |
| A | KR 10-2018-0127044 A (LG CHEM, LTD.) 28 November 2018 (2018-11-28) See abstract; and claims 1-11. | 1-16 |
| A | CN 117012908 A (HEFEI GUOXUAN HIGH-TECH POWER ENERGY CO., LTD.) 07 November 2023 (2023-11-07) See abstract; and claims 1-10. | 1-16 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 April 2025** | **08 April 2025** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/020747** |

| C. | DOCUMENTS CONSIDERED TO BE RELEVANT | | |
| --- | --- | --- | --- |
| Category* | Citation of document, with indication, where appropriate, of the relevant passages | | Relevant to claim No. |
| A | KR 10-2017-0020850 A (AMPRIUS, INC.) 24 February 2017 (2017-02-24)<br>    See abstract; and claims 1-21. | | 1-16 |

Form PCT/ISA/210 (second sheet) (July 2022)

## INTERNATIONAL SEARCH REPORT
### Information on patent family members

International application No.

**PCT/KR2024/020747**

| Patent document cited in search report | | | Publication date (day/month/year) | Patent family member(s) | | | Publication date (day/month/year) |
|---|---|---|---|---|---|---|---|
| KR | 10-2019-0083304 | A | 11 July 2019 | None | | | |
| CN | 111162246 | A | 15 May 2020 | CN | 111162246 | B | 26 January 2021 |
| KR | 10-2018-0127044 | A | 28 November 2018 | CN | 110062973 | A | 26 July 2019 |
| | | | | CN | 110062973 | B | 11 February 2022 |
| | | | | EP | 3537519 | A1 | 11 September 2019 |
| | | | | EP | 3537519 | A4 | 04 December 2019 |
| | | | | EP | 3537519 | B1 | 02 June 2021 |
| | | | | KR | 10-2265214 | B1 | 16 June 2021 |
| | | | | US | 11575117 | B2 | 07 February 2023 |
| | | | | US | 2019-0305298 | A1 | 03 October 2019 |
| | | | | WO | 2018-212453 | A1 | 22 November 2018 |
| CN | 117012908 | A | 07 November 2023 | None | | | |
| KR | 10-2017-0020850 | A | 24 February 2017 | CN | 106797051 | A | 31 May 2017 |
| | | | | EP | 3155687 | A1 | 19 April 2017 |
| | | | | EP | 3155687 | A4 | 06 December 2017 |
| | | | | JP | 2017-526106 | A | 07 September 2017 |
| | | | | US | 2015-0364795 | A1 | 17 December 2015 |
| | | | | WO | 2015-192051 | A1 | 17 December 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230189412
- KR 1020240189739
- KR 1020190083304